# EUROPÄISCHE PATENTSCHRIFT

(11) **EP 0 953 791 B1**
(45) Veröffentlichungstag und Bekanntmachung des Hinweises auf die Patenterteilung: **02.07.2003**
(21) Anmeldenummer: 99107854.4
(22) Anmeldetag: 21.04.1999
(51) Int. Cl.: F16H 63/16, F16H 3/14

(54) **Schalteinrichtung für ein Getriebe zur Drehrichtungsumkehr**
Gearshift device for a reversing gearbox
Dispositif de changement de vitesses pour une boîte d'inversion

(30) Priorität: 29.04.1998 US 70357; 29.04.1998 US 69650
(43) Veröffentlichungstag der Anmeldung: 03.11.1999
(73) Patentinhaber: DEERE & COMPANY, Moline, Illinois 61265-8098 (US)
(72) Erfinder: Patton, Jon Richard, Coffeyville, Kansas 67337 (US); Hamby, Glenn Markham, Coffeyville, Kansas 67337 (US); Folk, Robert Allen, Coffeyville, Kansas 67337 (US)
(74) Vertreter: Lau-Loskill, Philipp, Dipl.-Phys.

(56) Entgegenhaltungen:
- EP-A- 0 391 604
- BE-A- 548 431
- CH-A- 402 541
- US-A- 4 451 238
- US-A- 4 484 488

## Beschreibung

Die Erfindung betrifft einen mechanischen Betätigungsmechanismus für eine zwischen Vorwärts- und Rückwärtsdrehrichtung umschaltbare, zwei Kupplungen enthaltende Doppelkupplungseinrichtung mit einer in einem Gehäuse drehbar gelagerten Umschaltwelle zum Einrücken und Ausrücken der Kupplungen. Des Weiteren betrifft die Erfindung eine Umschalteinheit gemäß dem Oberbegriff des Patentanspruchs 1.

Es sind hydraulisch arbeitende Getriebe, insbesondere Fahrzeuggetriebe bekannt, die Umschalteinheiten zur Umschaltung zwischen Vorwärts- und Rückwärtsdrehrichtung aufweisen, welche hydraulisch betätigte Kupplungen enthalten. Derartige Getriebe erfordern eine Hydraulikpumpe. Die Bereitstellung von Leistung an die Hydraulikpumpe vermindert den Gesamtwirkungsgrad des Getriebes. Es ist daher wünschenswert, eine mechanisch betätigte Umschalteinrichtung bereitzustellen. Solch eine Umschalteinrichtung sollte auch bei Verwendung von Schmiermittelkupplungen anwendbar sein.

Es ist des Weiteren wünschenswert für die Betätigung der Kupplungen einer Doppelkupplungs-Umschalteinrichtung einen mechanisch betätigbaren Betätigungsmechanismus bereitzustellen, durch den sich eine Schaltcharakteristik ausführen lässt, die ähnlich zu der Charakteristik ist, die sich für eine konventionelle, hydrostatisch angetriebene Vorwärts-Rückwärts-Wechselumschaltung ergibt. Es ist auch wünschenswert einen solchen Betätigungsmechanismus zu haben, der eine Wechselumschaltung ermöglicht, während ein Gang des Getriebes eingelegt ist. Des Weiteren ist es wünschenswert einen Betätigungsmechanismus zu haben, der eine positive Neutralauskuppelfunktion bereitstellt, bei der beide Kupplungen ausgerückt sind, so wie es beim Umschalten des Getriebes zwischen zwei Gangbereichen der Fall ist.

Aus der CH-A-402 541 geht ein zwischen zwei Drehrichtungen umsteuerbares Getriebe mit einer Eingangswelle und einer Ausgangswelle hervor. Auf der Ausgangswelle sind axial hintereinander zwei Kupplungen angeordnet, durch die sich jeweils ein Zahnkranz mit der Welle kuppeln lässt. Ein erstes Festrad der Eingangswelle steht mit dem Zahnkranz der ersten Kupplung und ein zweites Festrad der Eingangswelle steht unter Zwischenschaltung eines Umkehrrades mit dem Zahnkranz der zweiten Kupplung in Verbindung. Zwischen den beiden Kupplungen befindet sich eine Umschalteinrichtung, die durch axiale Verschiebung eine der beiden Kupplungen einrückt. Die Verschiebung erfolgt durch eine Schaltstange, die über einen zweiarmigen Zwischenhebel auf eine Schaltgabel der Umschalteinrichtung einwirkt.

Die gattungsgemäße BE-A-548 431 beschreibt eine zwei Kupplungen enthaltende Kupplungseinrichtung mit einer Umschaltvorrichtung, die zur Umschaltung zwischen Vorwärts- und Rückwärtsdrehrichtung eine Umschaltung zwischen zwei Getriebewellen ermöglicht. Die Umschaltvorrichtung enthält eine sich quer zu den Getriebewellen erstreckende mit einem Schalthebel verbunden Schaltwelle, an der zwei Halterungen befestigt sind. Das freie Ende jeder Halterungen trägt eine Hülse durch die sich ein Stift verdrehbar erstreckt. Jeder Stift ist mit der Mitnehmergabel einer der beiden Kupplungen verbunden. Beim Betätigen des Schalthebels wird die Schaltwelle verdreht, wodurch die Lage der Hülsen verändert wird und eine der beiden Kupplungen eingerückt und die andere Kupplung ausgerückt wird.

Die der Erfindung zugrunde liegende Aufgabe wird darin gesehen, einen mechanischen Betätigungsmechanismus für eine mechanische betätigbare Doppelkupplungseinheit, durch die sich die Drehrichtung zwischen Vorwärts und Rückwärts umschalten lässt, bereitzustellen. Der Betätigungsmechanismus soll eine positive Neutralauskuppelfunktion ermöglichen. Die Umschaltcharakteristik soll ähnlich zu der sein, wie sie sich bei konventionellen hydraulisch angetriebene Vorwärts-Rückwärts-Wechselumschaltung ergibt.

Die Aufgabe wird erfindungsgemäß durch die Lehre der Patentansprüche 1 oder 10 gelöst. Weitere vorteilhafte Ausgestaltungen und Weiterbildungen der Erfindung gehen aus den Unteransprüchen hervor.

Die erfindungsgemäße Umschalteinrichtung ermöglicht ein mechanisches Umschalten der Drehrichtung zwischen vorwärts und Rückwärts, ohne dass hierfür eine Hydraulikpumpe benötigt wird. Dies erhöht, wie bereits erläutert wurde, den Gesamtwirkungsgrad des Getriebes. Die Umschalteinrichtung kann auch bei Verwendung von Schmiermittelkupplungen Anwendung finden.

Der mechanische Betätigungsmechanismus für eine zwischen Vorwärts und Rückwärts umschaltbare, zwei Kupplungen enthaltende Doppelkupplungseinrichtung enthält erfindungsgemäß eine in einem Gehäuse drehbar gelagerte Umschaltwelle, die auf ihrer äußeren Peripherie wenigstens zwei Steuerflächen aufweist. Die Steuerflächen sind jeweils mit einer zugehörigen Kupplung derart wirksam gekoppelt, dass durch Verdrehen der Umschaltwelle die Steuerflächen das Einrücken und Ausrücken der Kupplungen beeinflussen. Alternativ oder ergänzend hierzu kann der mechanische Betätigungsmechanismus auch zusätzlich zu einer in einem Gehäuse drehbar gelagerten Welle eine hohle zylindrische Hülse aufweisen, die drehbar auf der Welle gelagert ist. Die Welle und die Hülse sind mit den Kupplungen derart wirksam gekoppelt, dass durch Verdrehen der Welle wahlweise die eine oder die anderen Kupplung einrückbar ist und dass sich die Hülse in eine Neutralposition verdrehen lässt, in der beide Kupplungen ausgerückt sind.

Der erfindungsgemäße Betätigungsmechanismus ermöglicht eine positive Neutralauskuppelfunktion. Seine Umschaltcharakteristik ist der konventionell hydraulisch angetriebener Vorwärts-Rückwärts-Wechselumschaltungen ähnlich.

Es ist von besonderem Vorteil, den erfindungsgemäßen Betätigungsmechanismus bei einer Umschalteinheit einzusetzen, die zur Umschaltung zwischen Vorwärts- und Rückwärtsdrehrichtung eine Eingangswelle, eine Zwischenwelle und eine Ausgangswelle enthält, die drehbar in einem Gehäuse gelagert sind. Die Eingangswelle trägt drehfest ein Eingangszahnrad, welches mit einem auf der Ausgangswelle drehbar gelagerten und über eine Vorwärtskupplung mit der Ausgangswelle kuppelbaren Vorwärtskupplungszahnrad sowie mit einem auf der Zwischenwelle drehbar gelagerten und über eine Rückwärtskupplung mit der Zwischenwelle kuppelbaren Rückwärtskupplungszahnrad in Eingriff steht. Die Ausgangswelle trägt drehfest ein Vorwärtszahnrad, welches mit einem auf der Zwischenwelle drehfest angeordneten Rückwärtszahnrad in Eingriff steht. Vorzugsweise sind die Vorwärtskupplung und die Rückwärtskupplung voneinander getrennt und nebeneinander angeordnet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht einer Doppelkupplungseinheit gemäß vorliegender Erfindung,
- Fig. 2: eine Endansicht der Doppelkupplungseinheit gemäß Fig. 1,
- Fig. 3: eine Seitenansicht der Doppelkupplungseinheit gemäß Fig. 1,
- Fig. 4: eine Schnittansicht entlang der Linie 4-4 der Fig. 2,
- Fig. 5: eine Schnittansicht entlang der Linie 5-5 der Fig. 3,
- Fig. 6: eine Schnittansicht entlang der Linie 6-6 der Fig. 2,
- Fig. 7: eine Seitenansicht der inneren Umschaltwelle der vorliegenden Erfindung, aus der Blickrichtung nach links bezüglich Fig. 6,
- Fig. 8: eine Schnittansicht entlang der Linie 8-8 der Fig. 7,
- Fig. 9: eine Schnittansicht entlang der Linie 9-9 der Fig. 7,
- Fig. 10: eine Ansicht von unten der äußeren Umschaltwelle bzw. Umschalthülse gemäß vorliegender Erfindung und
- Fig. 11: eine Schnittansicht entlang der Linie 11-11 der Fig. 10,

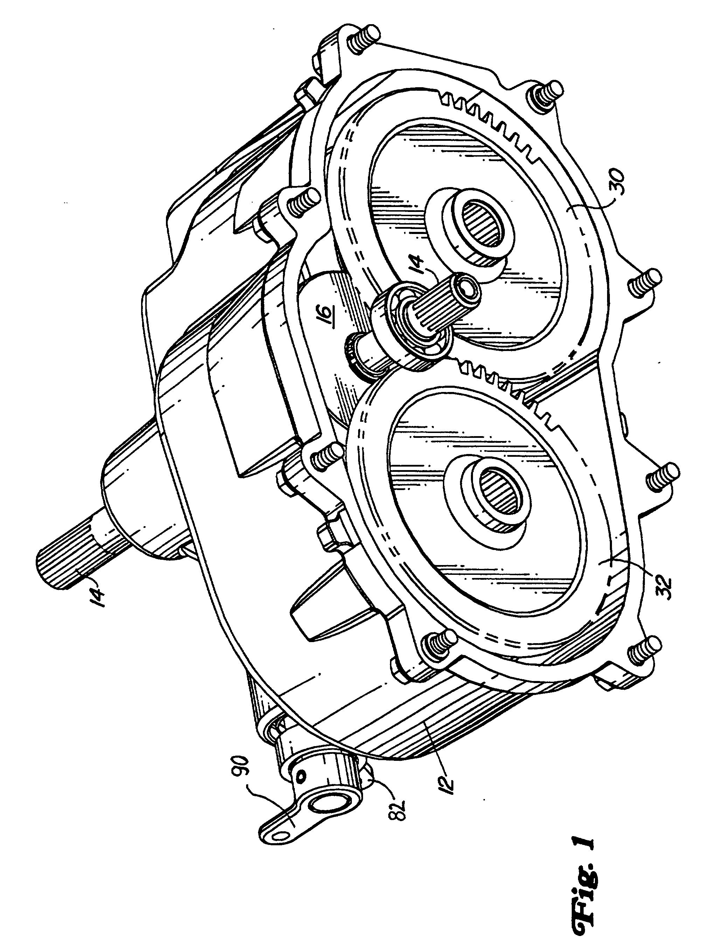

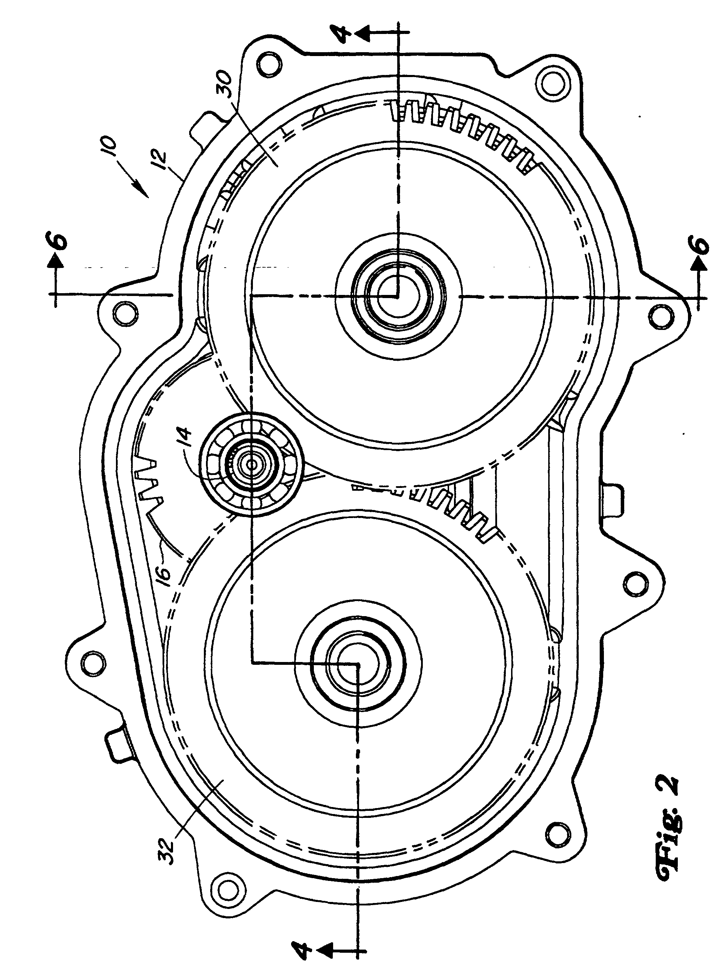

Aus den Figuren 1 bis 4 geht eine Doppelkupplungs-Reversiereinheit 10 zum Umschalten zwischen Vorwärts und Rückwärts hervor, welche eine Eingangswelle 14 aufweist, deren beiden Enden über Lagerstellen in einem Gehäuse 12 gelagert sind. Ein inneres Zahnrad 16 ist mit einem keilverzahnten Bereich der Eingangswelle 14 drehfest verbunden. Das innere Zahnrad 16 kämmt mit einem Vorwärtskupplungszahnrad 18 und mit einem Rückwärtskupplungszahnrad 20. Das Vorwärtskupplungszahnrad 18 ist über ein Lager 24 drehbar auf einer Ausgangwelle 22 angeordnet. Das Rückwärtskupplungszahnrad 20 ist über ein Lager 28 drehbar auf einer Zwischenwelle 26 angeordnet. Auf der Ausgangwelle 22 ist ein Vorwärts-Zahnrad 30 drehfest montiert, und auf der Zwischenwelle 26 ist ein Rückwärts-Zahnrad 32 drehfest montiert. Die verstärkt ausgebildeten Zahnräder 30 und 32 sind miteinander verzahnt. Jedes der beiden Kupplungszahnräder 18, 20 ist durch eine zugehörige Kupplungseinrichtung 34, 36 mit seiner zugehörigen Welle 22, 26 kuppelbar.

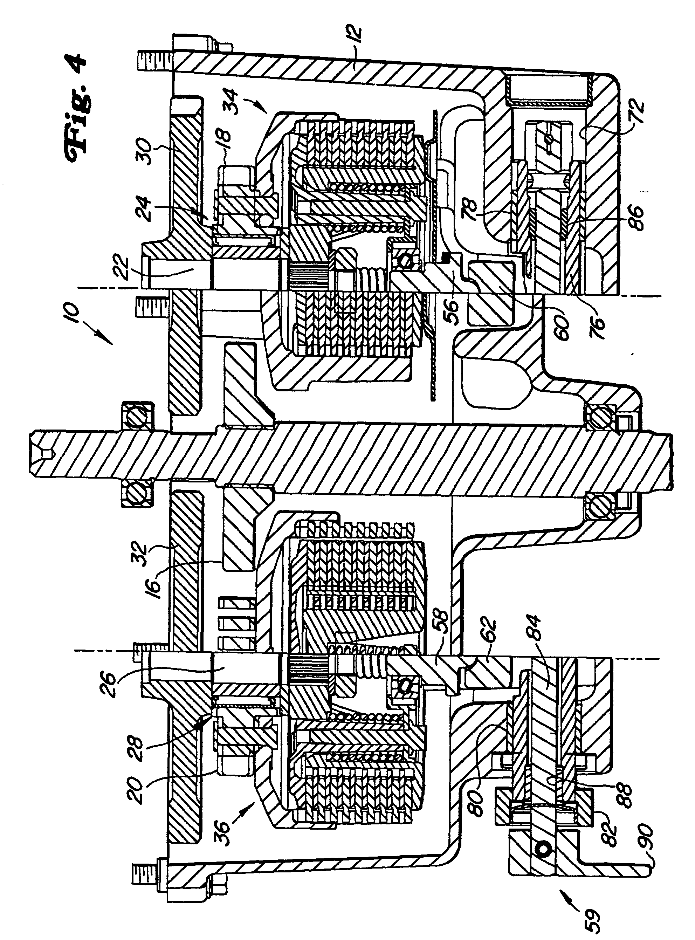

Jede der beiden Kupplungseinrichtungen 34, 36 weist, abgesehen von geringfügigen Abänderungen, Ähnlichkeiten mit üblichen, im Handel erhältlichen Motorradkupplungen auf, die durch Federkraft in Eingriff gebracht werden, um Drehmomente zu übertragen, und die manuell oder mechanisch auskuppelbar sind. Solche Kupplungen werden beispielsweise durch F.C.C. Co. Ltd., eine Tochtergesellschaft von Kanematsu USA, Inc., hergestellt. Für die vorliegende Anwendung können die handelsüblichen Kupplungen modifiziert werden, durch Bereitstellung von zusätzlichem Zwischenraum für eine Nietverbindung der Kupplungszahnräder 18 und 20 sowie für die Aufnahme einer keilverzahnten Eingangswelle, und durch Hinzufügen einer Kupplungsausrückplatte und eines Lagers sowie durch Entfernen einer nicht dargestellten Vibrierfeder und eines nicht dargestellten Vibrierauflagers. Die Kupplungen 34 und 36 lassen sich ausrücken, indem Ausrückstifte 56 bzw. 58 bezüglich Fig. 4 nach oben gedrückt werden. Die Kupplungen 34 und 36 sind bezüglich Fig. 4 nebeneinander und zueinander seitlich beabstandet angeordnet.

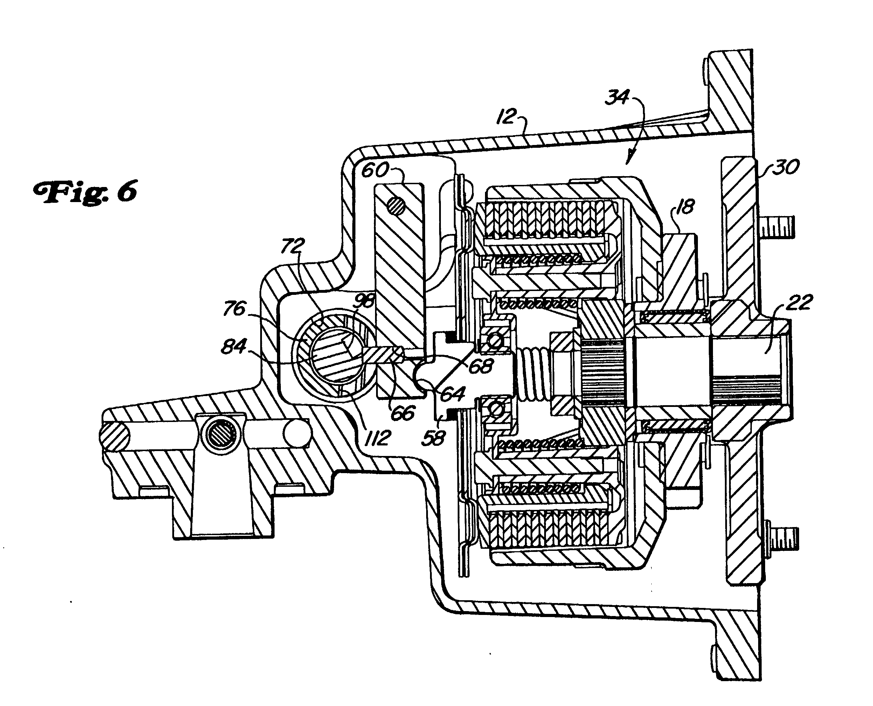

Die Lage der Ausrückstifte 56, 58 und damit der Einrückzustand der Kupplungen 34 bzw. 36 wird durch einen Betätigungsmechanismus 59, wie er am besten aus den Figuren 4 und 6 hervorgeht, gesteuert. Der Betätigungsmechanismus 59 enthält Ausrückelemente oder Ausrückhebel 60 und 62, die in dem Gehäuse 12 verschwenkbar gelagert sind und die mit den Ausrückstiften 56 und 58 in Eingriff stehen. Wie aus Fig. 6 hervorgeht, hat jeder Ausrückhebel 60, 62 eine Ausnehmung 64, die ein Ende des zugehörigen Ausrückstiftes 56, 58 aufnimmt, und einen Stift 66, der in eine in den Körper der Ausrückhebel 60, 62 eingelassene Stufenbohrung eingepreßt ist.

Der Betätigungsmechanismus 59 umfaßt miteinander fluchtende Bohrungen 72 und 74, die in gegenüberliegende Seitenwandungen des Gehäuses 12 eingelassen sind. Von den Bohrungen 72, 74 wird über Lager 78, 80 eine hohle zylindrische Hülse 76 (äußerer Umschaltwelle, durch die sich die Kupplungen ausrücken lassen) drehbar aufgenommen. Ein Auskuppelhebel 82 ist an einem außen liegenden Ende der Hülse 76 befestigt und steht vorzugsweise über ein nicht näher dargestelltes Gestänge mit einem nicht dargestellten Fußpedal in Verbindung. Eine innere Umschaltwelle 84 ist über Lager 86, 88 innerhalb der Hülse 76 drehbar angeordnet. An einem außen liegenden Ende der Umschaltwelle 84 ist ein Umschalthebel 90 befestigt, der vorzugsweise über ein nicht gezeigtes Gestänge mit einer von Hand bedienbaren, in einer Fahrzeugkabine angeordneten Umschalteinrichtung in Verbindung steht.

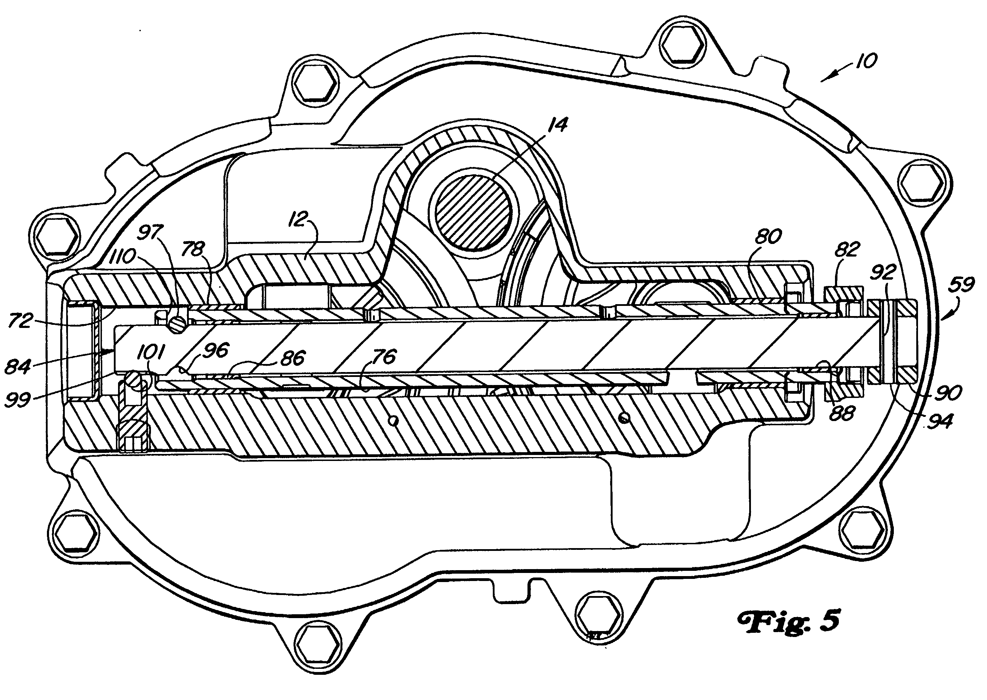

Wie aus den Figuren 5 und 7 bis 9 hervorgeht, hat die innere Umschaltwelle 84 eine Querbohrung 92. In die Querbohrung 92 ist ein Stift 94 eingepreßt, durch den der Umschalthebel 90 mit der Umschaltwelle 84 drehfest verbunden ist. Nahe des anderen Endes der Umschaltwelle 84 ist in diese eine Ringnut 96 eingelassen. Die Ringnut 96 nimmt einen Lokalisierungstift 97 auf, durch den die Umschaltwelle 84 axial in dem Gehäuse 12 fixiert wird. Wie aus Fig. 5 hervorgeht, erstreckt sich nahe eines Endes der Umschaltwelle 84 eine axial ausgerichtete flache Nut 99. Eine Arretierungskugel 101 wird in die Nut 99 gedrängt, um die Umschaltwelle 84 lösbar in der in Fig. 5 und 6 gezeigten Lage zu halten, wobei sich eine Raststellung (Neutralstellung) ergibt. Die Arretierkugel 101 wird durch einen üblichen Federkolben, wie er beispielsweise von Carr Lane Mfg. Co. hergestellt wird, in die Nut 101 gedrückt.

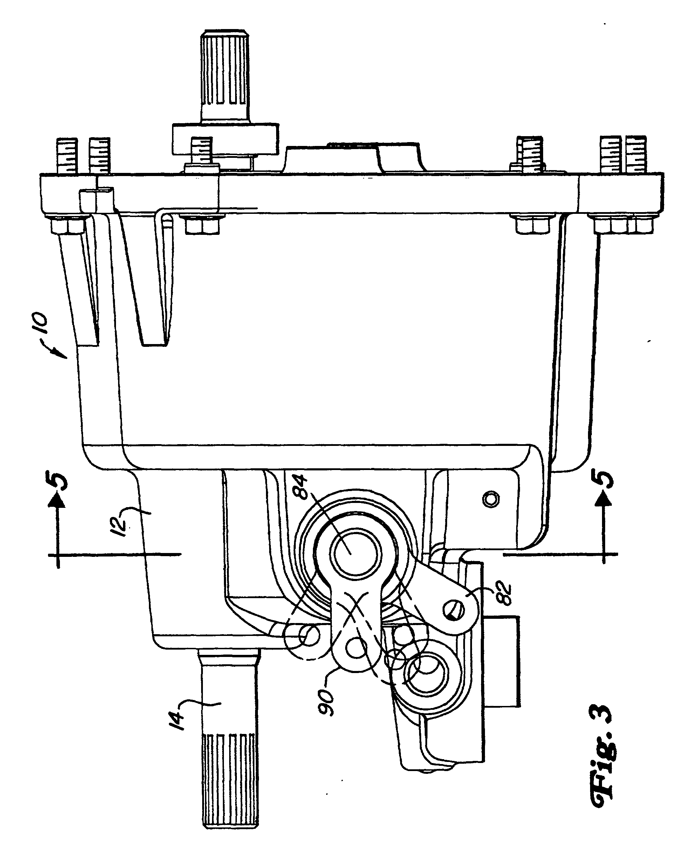

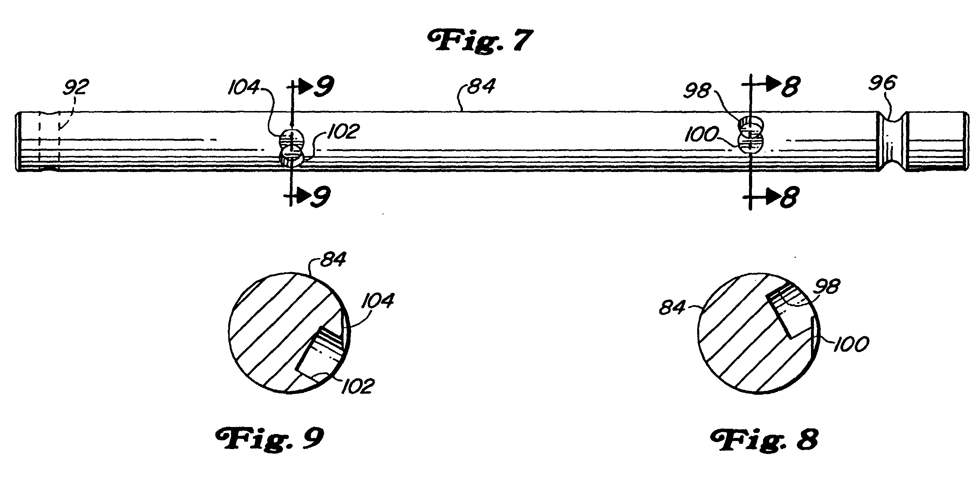

Wie aus den Figuren 8 und 9 hervorgeht, ist in die Oberfläche der Umschaltwelle 84 eine tiefere radiale Sackbohrung 98 oder Ausnehmung eingelassen, und zwar an einer solchen Stelle, daß sie mit dem Stift 66 des Ausrückhebels 60 in Eingriff treten kann. Eine flache Sackbohrung 100 oder Ausnehmung befindet sich auf gleicher axialer Höhe und schneidet die tiefere Sackbohrung 98, so daß sich ein Überlappungsbereich ergibt. Wie aus den Figuren 7 und 9 hervorgeht, erstreckt sich in die Oberfläche der Umschaltwelle 84 eine weitere tiefere radiale Sackbohrung 102 oder Ausnehmung, und zwar an einer solchen Stelle, daß sie mit einem nicht gezeigten Stift des Ausrückhebels 62 in Eingriff treten kann. Eine weitere flache Sackbohrung 104 oder Ausnehmung befindet sich auf gleicher axialer Höhe und schneidet die tiefere Sackbohrung 102, so daß sich ein Überlappungsbereich ergibt. Gemäß den Figuren 7 bis 9 schließen die Achsen der tieferen Sackbohrungen 98 und 102 einen Winkel von 60° miteinander ein. Befindet sich der Umschalthebel 90 in der in den Figuren dargestellten Lage, in der beide Kupplungen 34, 36 ausgerückt sind, so ist die Achse der tieferen Sackbohrung 98 gegenüber der Achse der flachen Sackbohrung 100 sowie der Längsachse des Umschalthebels 90 hinsichtlich der Figuren 3, 6 und 8 um 30° gegen den Uhrzeigersinn versetzt. Auf ähnliche Weise ist die Achse der tieferen Sackbohrung 102 um 30° in Richtung des Uhrzeigersinns gegenüber der Achse der flachen Sackbohrung 104 und der Längsachse des Umschalthebels 90 versetzt. In der dargestellten Lage wird der Stift 66 des Ausrückhebels 60 von der flachen Sackbohrung 100 sowie der nicht dargestellte Stift des Ausrückhebels 62 von der flachen Sackbohrung 104 aufgenommen. Aus den Figuren 7 bis 9 ist ersichtlich, daß das Paar der aus den Sackbohrungen 98, 100 und 102, 104 gebildeten Steueroberflächen axial zueinander beabstandet ist, daß die flachen Sackbohrungen 100, 104 der beiden Steueroberflächen Achsen aufweisen, die in einer Ebene gemeinsam mit der Achse der Umschaltwelle 84 liegen (d. h. die Achsen der Sackbohrungen schneiden die Achse der Umschaltwelle), und daß die tieferen Sackbohrungen 98 und 102 so ausgerichtet sind, daß ihre Achsen um 30° nach oben bzw. unten gegenüber dieser Ebene geneigt sind.

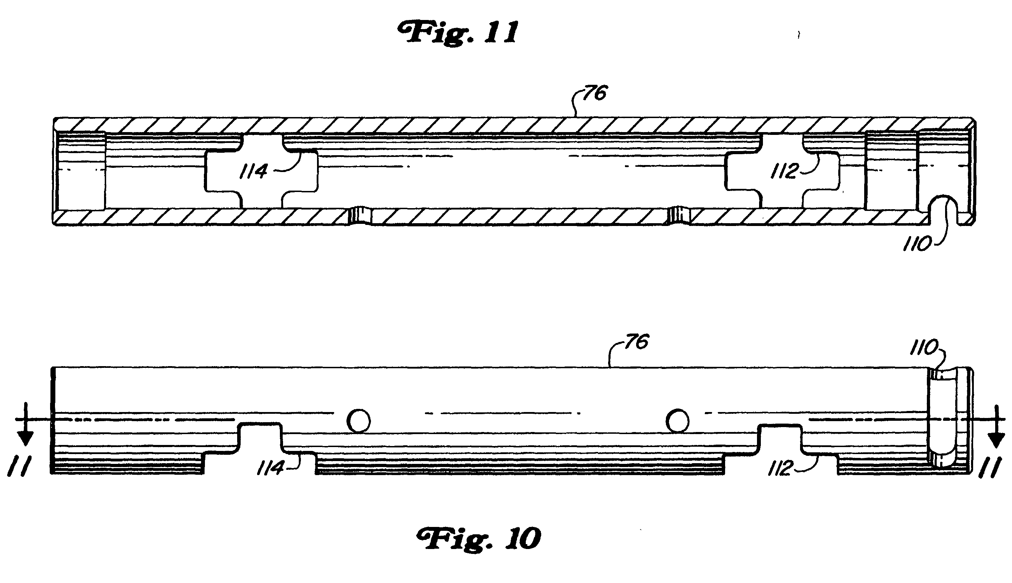

Gemäß Fig. 10 und 11 enthält die Hülse 76 einen Schlitz 110, durch welchen sich der Lokalisierungstift 97 erstreckt, so daß der Lokalisierungstift 97 auch die Hülse 76 in ihrer axialen Lage hält, die sich um einen begrenzten Betrag verdrehen läßt. Zwei kreuzförmige Öffnungen 112 und 114 sind in die Wandung der Hülse 76 eingelassen, so daß der Stift 66 des Ausrückhebels 60 sich durch die Öffnung 112 und der nicht gezeigte Stift des Ausrückhebels 62 sich durch die Öffnung 114 erstreckt.

### Betriebsweise

Wenn sich der Umschalthebel 90 und der Auskuppelhebel 82 jeweils in der dargestellten Position befinden, werden die Stifte 66 der Ausrückhebel 60 und 62 durch die flachen Sackbohrungen 100 bzw. 104 aufgenommen, wobei beide Kupplungen 34 und 36 ausgerückt sind. Die Federkräfte der Kupplungen 34 und 36, die über die Stifte 66 der Ausrückhebel 60 und 62 auf die Umschaltwelle 84 wirken, sind groß genug, um normalerweise eine Verdrehung der Umschaltwelle 84 und des Umschalthebels 90 aus dieser Neutralstellung zu verhindern.

Um die Umkehreinrichtung 10 in die Vorwärtsposition zu bringen, muß die Bedienungsperson ein nicht gezeigtes Kupplungspedal betätigen, so daß sich der Auskuppelhebel 82 aus seiner in Fig. 3 dargestellten Lage um 40° im Uhrzeigersinn verdreht. Hierdurch wird auch die Hülse 76 so verdreht, daß eine die Öffnungen 112 und 114 eingrenzende Hülsenwandung mit dem zugehörigen Ausrückhebel 60 und 62 in Eingriff tritt, wodurch die unteren Enden der Ausrückhebel 60 und 62 nach rechts (gemäß Fig. 6) verschwenkt werden. Hierbei werden die Stifte 66 der Ausrückhebel 60 und 62 aus den flachen Sackbohrungen 100 und 104 bewegt. Da diese Stifte 66 nun keine Kraft mehr auf die Umschaltwelle 84 ausüben, läßt sich der Umschalthebel 90 mit der Umschaltwelle 84 verdrehen.

Wenn bei betätigtem Kupplungspedal der Umschalthebel 90 und die Umschaltwelle 84 bezüglich Fig. 3 im Uhrzeigersinn verdreht werden, und dann das Kupplungspedal freigegeben wird, wird der Stift 66 des Ausrückhebels 60 durch die tiefere Sackbohrung 98 aufgenommen, das untere Ende des Ausrückhebels 60 dreht bezüglich Fig. 6 nach links, die Vorwärtskupplung 34 wird eingerückt und die Ausgangswelle 22 dreht sich mit umgekehrten Drehsinn wie die Eingangswelle 14. Zur gleichen Zeit drückt der nicht dargestellte Stift des Ausrückhebels 62 auf den äußeren Durchmesser der Umschaltwelle 84 und die Rückwärtskupplung 36 bleibt ausgerückt. Drehmoment kann somit von der Eingangswelle 14 über die Zahnräder 16 und 18 und die Vorwärtskupplung 34 auf die Ausgangswelle 22 übertragen werden. Die Ausgangswelle 22 dreht dann in umgekehrter Richtung wie die Eingangswelle 14. Da der Stift 66 des Ausrückhebels 60 von der tieferen Sackbohrung 98 aufgenommen wird, kann die Umschaltwelle 84 so lange nicht aus dieser Vorwärtsstellung verdreht werden, bis das Kupplungspedal wieder betätigt wird.

Um die Umkehreinrichtung 10 zurück in Neutral zu verstellen, muß die Bedienungsperson das Kupplungspedal betätigen und den Umschalthebel 90 und die Umschaltwelle 84 um 30° gegen den Uhrzeigersinn (gemäß Fig. 3) zurück in ihre ursprüngliche Neutrallage (wie oben beschrieben) drehen.

Auf ähnliche Weise erfolgt eine Verstellung in die Rückwärtsposition, indem die Bedienungsperson das Kupplungspedal niederdrückt (betätigt), den Umschalthebel 90 und die Umschaltwelle 84 gegen den Uhrzeigersinn (gemäß Fig. 3) aus der Neutralstellung verschwenkt und dann das Kupplungspedal wieder entlastet. Dies bewirkt, daß der Stift 66 des Ausrückhebels 60 sich auf dem äußeren Durchmesser der Umschaltwelle 84 abstützt und der Stift des Ausrückhebels 62 in die tiefere Sackbohrung 102 eingreift. Hierdurch wird das untere (freie) Ende des Ausrückhebels 62 veranlaßt, sich in Richtung Umschaltwelle 84 zu verschwenken, so daß die Rückwärtskupplung 36 eingreift. Drehmoment kann dann von der Eingangswelle 14 über die Zahnräder 16 und 20, die Rückwärtskupplung 36 und die Zahnräder 32 und 30 auf die Ausgangswelle 22 übertragen werden. Die Ausgangswelle 22 dreht dann in der selben Richtung wie die Eingangswelle 14. Da der Stift des Ausrückhebels 62 von der tieferen Sackbohrung 102 aufgenommen wird, kann die Umschaltwelle 84 so lange nicht aus dieser Rückwärtsstellung verdreht werden, bis das Kupplungspedal wieder betätigt wird.

Um die Umkehreinrichtung 10 zurück in Neutral zu verstellen, muß die Bedienungsperson das Kupplungspedal niedertreten und den Umschalthebel 90 mit der Umschaltwelle 84 um 30° in Uhrzeigersinn zurück in ihre ursprüngliche Neutrallage (wie oben beschrieben) drehen.

## Patentansprüche

1. Betätigungsmechanismus für eine zwischen Vorwärts- und Rückwärtsdrehrichtung umschaltbare, zwei Kupplungen (34, 36) enthaltende Doppelkupplungseinrichtung mit einer in einem Gehäuse (12) drehbar gelagerten Umschaltwelle (84) zum Einrücken und Ausrücken der Kupplungen (34, 36), wobei die Umschaltwelle (84) auf ihrer äußeren Peripherie wenigstens zwei Steuerflächen (98, 100; 102, 104) aufweist, **dadurch gekennzeichnet, dass** die Steuerflächen jeweils mit einer zugehörigen Kupplung (34, 36) derart wirksam gekoppelt sind, dass durch Verdrehen der Umschaltwelle (84) die Steuerflächen (98, 100; 102, 104) das Einrücken und Ausrücken der Kupplungen (34, 36) beeinflussen.

2. Betätigungsmechanismus für eine zwischen Vorwärts- und Rückwärtsdrehrichtung umschaltbare, zwei Kupplungen (34, 36) enthaltende Doppelkupplungseinrichtung mit einer in einem Gehäuse (12) drehbar gelagerten Umschalt-Welle (84) zum Einrücken und Ausrücken der Kupplungen (34, 36), wahlweise nach Anspruch 1, **dadurch gekennzeichnet, dass** auf der Welle (84) eine hohle zylindrische Hülse (76) drehbar gelagert ist, wobei die Welle (84) und die Hülse (76) mit den Kupplungen (34, 36) derart wirksam gekoppelt sind, dass durch Verdrehen der Welle (84) wahlweise die eine oder die anderen Kupplung (34, 36) einrückbar ist und dass sich die Hülse (76) in eine Neutralposition verdrehen lässt, in der beide Kupplungen (34, 36) ausgerückt sind.

3. Betätigungsmechanismus nach Anspruch 2, **dadurch gekennzeichnet, dass** die Hülse (76) auf ihrer äußeren Peripherie wenigstens zwei Steuerflächen (112, 114) aufweist, welche mit den Kupplungen (34, 36) derart wirksam gekoppelt sind, dass durch Verdrehen der Hülse (76) in eine bestimmte Lage beide Kupplungen (34, 36) ausgerückt werden.

4. Betätigungsmechanismus nach Anspruch 2 oder 3, **dadurch gekennzeichnet, dass** die Hülse (76) zwei Öffnungen (112, 114) enthält, welche die Steuerflächen (98, 100; 102, 104) der Welle (84) freilegen und ein Zusammenwirken zwischen den Steuerflächen (98, 100; 102, 104) und den Kupplungen (34, 36) ermöglichen, und dass die Hülse (76) in eine Lage verdrehbar ist, in der Wandungen der Öffnung (112, 114) beide Kupplungen (34, 36) auszurücken.

5. Betätigungsmechanismus nach einem der Ansprüche 1 bis 4, **dadurch gekennzeichnet, dass** in dem Gehäuse (12) wenigstens zwei Ausrückhebel (60, 62) verschwenkbar gelagert sind, die mit jeweils einem ihrer Bereiche, beispielsweise mit einer ihrer Seiten, mit einer zugehörigen Kupplung (34, 36) zusammenwirken und die mit jeweils einem anderen ihrer Bereiche oder einem Teilstück (66) mit einer Steuerfläche (98, 100; 102, 104) der Welle (84) und/oder der Hülse (76) zusammenwirken.

6. Betätigungsmechanismus nach Anspruch 5, **dadurch gekennzeichnet, dass** der andere Bereich oder das Teilstück (66) des Ausrückhebels (60, 62) durch Öffnungen (112, 114) der Hülse (76) mit einer Steuerfläche (98, 100; 102, 104) der Welle (84) zusammenwirken.

7. Betätigungsmechanismus nach einem der Ansprüche 1 bis 6, **dadurch gekennzeichnet, dass** jede Steuerfläche (98, 100; 102, 104) der Welle (84) durch eine tiefere Ausnehmung (98, 102) und eine flache Ausnehmung (100, 104) gebildet ist, welche in die Oberfläche der Welle (84) eingelassen sind.

8. Betätigungsmechanismus nach Anspruch 7, **dadurch gekennzeichnet, dass** sich jeweils eine tiefere Ausnehmung (98, 102) und eine flache Ausnehmung (100, 104) teilweise überlappen.

9. Betätigungsmechanismus nach Anspruch 7 oder 8, **dadurch gekennzeichnet**,' dass zwei axial zueinander beabstandete Steuerflächen (98, 102; 100, 104) vorgesehen sind und dass die Achsen (Ausrichtung) der flachen Ausnehmungen (100, 104) gemeinsam in einer Ebene mit der Achse der Welle (84) liegen.

10. Umschalteinheit mit einer Betätigungsmechanismus nach einem der Ansprüche 1 bis 9 zur Umschaltung zwischen Vorwärts- und Rückwärtsdrehrichtung mit einer Eingangswelle (14), einer Zwischenwelle (26) und einer Ausgangswelle (22), die drehbar in einem Gehäuse (12) gelagert sind, wobei die Eingangswelle (14) drehfest ein Eingangszahnrad (16) trägt, welches mit einem auf der Ausgangswelle (22) drehbar gelagerten und über eine Vorwärtskupplung (34) mit der Ausgangswelle (22) kuppelbaren Vorwärtskupplungszahnrad (18) sowie mit einem auf der Zwischenwelle (26) drehbar gelagerten und über eine Rückwärtskupplung (36) mit der Zwischenwelle (26) kuppelbaren Rückwärtskupplungszahnrad (20) in Eingriff steht, und wobei die Ausgangswelle (22) drehfest ein Vorwärtszahnrad (30) trägt, welches mit einem auf der Zwischenwelle (26) drehfest angeordneten Rückwärtszahnrad (32) in Eingriff steht.

11. Umschalteinheit nach Anspruch 10, **dadurch gekennzeichnet, dass** die Vorwärtskupplung (34) und die Rückwärtskupplung (36) voneinander getrennt, nebeneinander angeordnet sind.

## Claims

1. An actuating mechanism for a double clutch device which contains two clutches (34, 36) and can be shifted between forward and reverse directions of rotation, with a shift shaft (84) mounted rotatably in a housing (12) for engaging and disengaging the clutches (34, 36), whereby the shift shaft (84) has at least two control surfaces (98, 100; 102, 104) on its outer periphery **characterised in that** the control surfaces which are each so operatively coupled to an associated clutch (34, 36) that the control surfaces (98, 100; 102; 104) affect the engagement and disengagement of the clutches (34, 36) through turning of the shift shaft (84).

2. An actuating mechanism for a double clutch device which contains two clutches (34, 36) and can be shifted between forward and reverse directions of rotation, with a shift shaft (84) mounted rotatably in a housing (12) for engaging and disengaging the clutches (34, 36), optionally according to claim 1, **characterized in that** a hollow, cylindrical sleeve (76) is rotatably mounted on the shaft (84), wherein the shaft (84) and the sleeve (76) are so operatively coupled to the clutches (34, 36) that the one or the other clutch (34, 36) can be selectively engaged by turning the shaft (84) and **in that** the sleeve (76) can be turned into a neutral position in which both clutches (34, 36) are disengaged.

3. An actuating mechanism according to claim 2, **characterized in that** the sleeve (76) has at least two control surfaces (112, 114) on its outer periphery which are so operatively coupled to the clutches (34, 36) that both clutches (34, 36) are disengaged by turning the sleeve (76) into a specific position.

4. An actuating mechanism according to claim 2 or 3, **characterized in that** the sleeve (76) has two openings (112, 114) which expose the control surfaces (98, 100; 102, 104) of the shaft (84) and enable cooperation between the control surfaces (98, 100; 102, 104) and the clutches (34, 36), and **in that** the sleeve (76) can be turned into a position in which walls of the openings (112, 114) disengage both clutches (34, 36).

5. An actuating mechanism according to any of claims 1 to 4, **characterized in that** at least two disengaging levers (60, 62) are pivotally mounted in the housing (12) and each cooperate through one of their regions, for example one of their sides, with an associated clutch (34, 36) and each cooperate through another of their regions or a part (66) with a control surface (98, 100; 102, 104) of the shaft (84) and/or the sleeve (76).

6. An actuating mechanism according to claim 5, **characterized in that** the other region or the part (66) of the disengaging lever (60, 62) cooperates through openings (112, 114) of the sleeve (76) with a control surface (98, 100; 102, 104) of the shaft (84).

7. An actuating mechanism according to any of claims 1 to 6, **characterized in that** each control surface (98, 100; 102, 104) of the shaft (84) is formed by a deeper recess (98, 102) and a shallow recess (100, 104), which are let into the surface of the shaft (84).

8. An actuating mechanism according to claim 7, **characterized in that** a deeper recess (98, 102) and a shallow recess (100, 104) partially overlap in each case.

9. An actuating mechanism according to claim 7 or 8, **characterized in that** two axially spaced control surfaces (98, 100; 102, 104) are provided and **in that** the axes (alignment) of the shallow recesses (100, 104) lie in common in a plane with the axis of the shaft (84).

10. A gearshift unit with an actuating mechanism according to any of claims 1 to 9, for shifting between forward and reverse directions of rotation, with an input shaft (14), an intermediate shaft (26) and an output shaft (22), which are rotatably mounted in a housing (12), wherein the input shaft (14) carries an input gearwheel (16) rotationally fast therewith, which is in engagement with a forward clutch gearwheel (18) which is rotatably mounted on the output shaft (22) and can be coupled to the output shaft (22) through a forward clutch (34), and with a reverse clutch gearwheel (20) which is rotatably mounted on the intermediate shaft (26) and can be coupled to the intermediate shaft (26) through a reverse clutch (36), and wherein the output shaft (22) carries a forwards gearwheel (30) which is in engagement with a reverse gearwheel (32) arranged rotationally fast on the intermediate shaft (26).

11. A gearshift unit according to claim 10, **characterized in that** the forward clutch (34) and the reverse clutch (36) are arranged separately from one another, beside one another.

## Revendications

1. Mécanisme d'actionnement pour un dispositif à double embrayage comprenant deux embrayages (34, 36) qui peut inverser la marche avant et la marche arrière et qui comporte un arbre inverseur (84) tournant dans un boîtier (12) pour embrayer et désembrayer les embrayages (34, 36), l'arbre inverseur (84) présentant sur sa périphérie extérieure au moins deux gouvernes (98, 100 ; 102, 104), **caractérisé en ce que** les gouvernes sont respectivement couplées de manière effective avec un embrayage correspondant (34, 36) de telle sorte que les gouvernes (98, 100 ; 102, 104) influent sur l'embrayage et le débrayage des embrayages (34, 36) par la rotation de l'arbre inverseur (84).

2. Mécanisme d'actionnement pour un dispositif à double embrayage comprenant deux embrayages (34, 36) qui peut inverser la marche avant et la marche arrière et qui comporte un arbre inverseur (84) tournant dans un boîtier (12) pour embrayer et désembrayer les embrayages (34, 36), en option selon la revendication 1 **caractérisé en ce que** un manchon (76) creux et cylindrique tourne sur l'arbre (84), l'arbre (84) et le manchon (76) étant couplés de manière effective aux embrayages (34, 36) de telle sorte que l'un ou l'autre des embrayages (34, 36) peut être embrayé au choix par la rotation de l'arbre (84) et que le manchon (76) peut être mis dans une position neutre dans laquelle les deux embrayages (34, 36) sont débrayés.

3. Mécanisme d'actionnement selon la revendication 2, **caractérisé en ce que** le manchon (76) présente sur sa périphérie extérieure au moins deux gouvernes (112, 114) qui sont couplées de manière effective avec les embrayages (34, 36) de telle manière que les deux embrayages (34, 36) sont débrayés dans une certaine position par la rotation du manchon (76).

4. Mécanisme d'actionnement selon l'une des revendications 2 ou 3 **caractérisé en ce que** le manchon (76) comporte deux ouvertures (112, 114) qui découvrent les gouvernes (98, 100 ; 102, 104) de l'arbre (84) et permettent une interaction entre les gouvernes (98, 100 ; 102, 104) et les embrayages (34, 36), et **en ce que** le manchon (76) peut être tourné dans une position dans laquelle les parois des ouvertures (112, 114) débrayent les deux embrayages (34, 36).

5. Mécanisme d'actionnement selon l'une des revendications 1 à 4, **caractérisé en ce qu'**au moins deux leviers de débrayage (60, 62) peuvent pivoter dans le boîtier (12) et coopèrent respectivement avec un embrayage correspondant (34, 36) par l'une de leurs zones, par exemple par l'un de leurs côtés et avec une gouverne (98, 100 ; 102, 104) de l'arbre (84) et/ou du manchon (76) par une autre de leurs zones ou une pièce partielle (66).

6. Mécanisme d'actionnement selon la revendication 5, **caractérisé en ce que** l'autre zone ou la pièce partielle (66) du levier de débrayage (60, 62) coopère via les ouvertures (112, 114) du manchon (76) avec une gouverne (98, 100 ; 102, 104) de l'arbre (84).

7. Mécanisme d'actionnement selon l'une des revendications 1 à 6, **caractérisé en ce que** chaque gouverne (98, 100 ; 102, 104) de l'arbre (84) est formée par un évidement plus profond (98, 102) et par un évidement plat (100, 104), qui sont creusés dans la surface de l'arbre (84).

8. Mécanisme d'actionnement selon la revendication 7, **caractérisé en ce qu'**un évidement plus profond (98, 102) et un évidement plat (100, 104) se chevauchent respectivement en partie.

9. Mécanisme d'actionnement selon la revendication 7 ou 8, **caractérisé en ce qu'**il est prévu deux gouvernes qui sont espacées l'une de l'autre axialement (98, 102 ; 100, 104) et **en ce que** les axes (orientation) des évidements plats (100, 104) se situent ensemble sur le même plan que l'axe de l'arbre (84).

10. Unité d'inversion comportant un mécanisme d'actionnement selon l'une des revendications 1 à 9 pour inverser la marche avant et la marche arrière qui comprend un arbre d'entrée (14), un arbre intermédiaire (26) et un arbre de sortie (22), qui tournent dans un boîtier (12), l'arbre d'entrée (14) portant une roue dentée d'entrée fixe (16), qui est en prise avec une roue dentée d'embrayage de marche avant tournant sur l'arbre de sortie (22) qui peut être couplée avec l'arbre de sortie (22) par un embrayage de marche avant (34) et avec une roue dentée d'embrayage de marche arrière tournant sur l'arbre intermédiaire (26) qui peut être couplée avec l'arbre intermédiaire (26) par un embrayage de marche arrière (36), et l'arbre de sortie (22) portant une roue dentée de marche avant (30) fixe, qui est en prise avec une roue dentée de marche arrière (32) fixe disposée sur l'arbre intermédiaire (26).

11. Dispositif d'inversion selon la revendication 10, **caractérisé en ce que** l'embrayage de marche avant (34) et l'embrayage de marche arrière (36), qui sont séparés l'un de l'autre, sont disposés l'un à côté de l'autre.
